(19) Europäisches Patentamt
European Patent Office
Office européen des brevets

(11) **EP 4 722 257 A1**

(12) **EUROPEAN PATENT APPLICATION**

(43) Date of publication:
**08.04.2026 Bulletin 2026/15**

(21) Application number: **25205607.2**

(22) Date of filing: **30.09.2025**

(51) International Patent Classification (IPC):
***C08F 2/26*** *(2006.01)* ***C08F 220/14*** *(2006.01)*
***C04B 26/02*** *(2006.01)* ***C08K 3/22*** *(2006.01)*
***C09D 133/14*** *(2006.01)* ***C08K 3/36*** *(2006.01)*
***C09D 133/12*** *(2006.01)* ***C08F 220/18*** *(2006.01)*

(52) Cooperative Patent Classification (CPC):
(C-Sets available)
**C08F 2/26; C04B 24/2688; C04B 28/24; C04B 40/0039; C08F 220/1804; C08K 3/22; C08K 3/36; C09D 133/12; C09D 133/14;**
C04B 2111/00517 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.10.2024 EP 24203978**

(71) Applicant: **Celanese International Corporation**
**Irving, TX 75039 (US)**

(72) Inventors:
- **JUNK, Matthias**
  **Irving, 75039 (US)**
- **FICHTNER, Thomas**
  **Irving, 75039 (US)**

(74) Representative: **Simmons & Simmons LLP (Munich)**
**Lehel Carré**
**Gewürzmühlstraße 11**
**80538 Munich (DE)**

(54) **METHODS FOR MAKING ORGANIC-INORGANIC HYBRID DISPERSIONS WITH IMPROVED STORAGE STABILITY**

(57) Disclosed are novel methods for making compositions which contain selected organic-inorganic dispersions and a silica sol and the use of these compositions in coatings.





(Cont. next page)

(52) Cooperative Patent Classification (CPC): (Cont.)

C-Sets
**C04B 28/24, C04B 24/163;**
**C04B 40/0039, C04B 14/062, C04B 24/163;**
**C04B 40/0039, C04B 14/062, C04B 24/2688;**
**C04B 40/0039, C04B 14/062, C04B 24/42;**
**C08F 220/1804, C08F 220/14, C08F 220/06, C08F 230/085, C08F 212/32;**
**C08F 220/1804, C08F 220/14, C08F 220/06, C08F 230/085, C08F 216/1475;**
**C08F 220/1804, C08F 220/14, C08F 230/085, C08F 220/06, C08F 212/08, C08F 212/32;**
**C08F 220/1804, C08F 220/1811, C08F 220/06, C08F 230/085, C08F 216/1475**

## Description

FIELD OF THE INVENTION

The present disclosure relates to novel methods for making compositions which contain selected organic-inorganic dispersions and a silica sol and have improved storage stability. Also disclosed is the use of these compositions in coatings such as paints or plasters and renders.

BACKGROUND

Aqueous compositions containing polymer dispersions and silica have been previously described for a range of applications. For example, dispersions comprising a silane-functional acrylic polymer and a finely divided silica sol can chemically react to form a nanostructured surface upon drying. These dispersions have specific advantageous properties for exterior coatings, for example. The nanostructured surface allows for a fast drying of the paints and plasters, for example. Due to its very small particle size, the silica sol introduces a lot of free surface area to the hybrid dispersion and therefore poses special challenges for the emulsifier used to stabilize the polymer dispersion. Common emulsifiers would migrate to the silica surface, leave the polymer dispersion unprotected, and therefore cause an aggregation and coagulation of the particles. Copolymerizable surfactants that chemically bond to the organic polymer particle can be used. However, some of such surfactants such as nonylphenol ethoxylates and octylphenol ethoxylates and their derivatives may be unfavorable due to their ability to act with estrogen-like activity. In addition, the dispersions can still suffer from limited storage stability. Although the use of compositions containing silica sol has been previously described, there is still a need for an improvement of these products. Specifically, compositions with better and less ecotoxic surfactants are desirable. Additionally, improved storage stability of such compositions is sought.

It has now surprisingly been found that selected polymer dispersions containing silica sol, specific surfactants in defined amounts, and selected additives can be formulated to give dispersions which have increased storage stability and maintain excellent abrasion resistance, little tendency to soiling, high water vapor permeability, good adhesion and good weathering stability. In addition, the compositions can be formulated to avoid the use of ecotoxic surfactants. The compositions according to the invention can be processed to give plasters and renders or paints which have a nanostructured surface and which differ from conventionally produced surfaces.

It is therefore an object of the present invention to provide methods for producing formulations which can be used as interior and in particular exterior plasters and renders or paints and which have the abovementioned advantageous properties.

BRIEF SUMMARY OF THE INVENTION

One or more embodiments include methods for producing an organic-inorganic composite dispersion by means of radically initiated emulsion polymerization of ethylenically unsaturated monomers, comprising adding to a reactor: (A) at least one ethylenically unsaturated monomer which has at least one silicon-comprising group; (B) at least one ethylenically unsaturated surface-active monomer according to Formulas 1 or 2 (below), where a is an integer from 0 to 5, *b* is an integer from 0 to 1, c is an integer from 1 to 3, *d* is an integer from 1 to 5, *n* is an integer from 4 to 15, preferably from 5 to 12, X is O or NH, M is an alkali metal ion or an ammonium ion, and R is C1-C30-alkyl, C2-C30-alkenyl, cycloalkyl, cycloalkenyl, aryl or acyl, preferably C6-C16-alkyl or aryl, in a weight of from 1 wt.% to 5 wt.%, based on the total weight of monomers; and (C) at least one additional monomer copolymerizable with monomers (A) and (B), wherein one or more initiators are added to the reactor before and/or during the emulsion polymerization; and wherein colloidal silica is also added, preferably after the polymerization.

Formula 1:

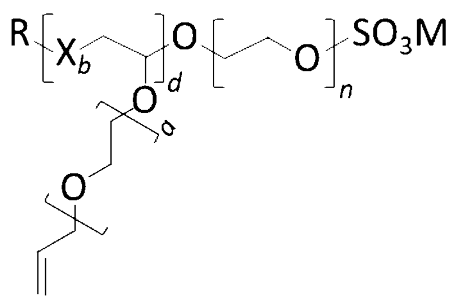

Formula 2:

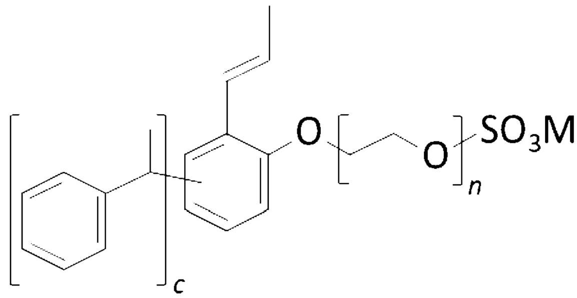

One or more embodiments include the methods of the preceding paragraph, wherein instead of or in addition to said at least one ethylenically unsaturated monomer having at least one silicon-comprising group, an alkoxysilane-functional compound having at least one amino, mercapto or epoxide group is added, preferably after completion of the emulsion polymerization.

One or more embodiments include the methods of any of the preceding paragraphs, wherein the polymerization produces a copolymer comprising more than 50 wt.%, based on the total amount of monomers, of monomer units based on esters of α,β-ethylenically unsaturated carboxylic acids, vinyl esters of saturated carboxylic acids, vinylaromatic monomers or combinations thereof, preferably C1-C8 alkyl esters of acrylic and methacrylic acid.

One or more embodiments include the methods of any of the preceding paragraphs, wherein at least 5% by weight, preferably at least 10% by weight of the monomers based on esters of α,β-ethylenically unsaturated carboxylic acids, vinyl esters of saturated carboxylic acids, vinylaromatic monomers or combinations thereof (preferably C1-C8 alkyl esters of acrylic and methacrylic acid), have a Hansch parameter greater 2.5.

One or more embodiments include the methods of any of the preceding paragraphs, wherein at least 5% by weight, preferably at least 10% by weight of the monomers based on esters of α,β-ethylenically unsaturated carboxylic acids, vinyl esters of saturated carboxylic acids, vinylaromatic monomers or combinations thereof (preferably C1-C8 alkyl esters of acrylic and methacrylic acid), have a Hansch parameter greater 2.5 and form homopolymers that have a glass transition temperature greater than 0 °C.

One or more embodiments include the methods of any of the preceding paragraphs, wherein the polymerization produces a copolymer comprising from 0.1 wt.% to 10 wt.%, based on the total amount of monomers, of monomer units based on α,β-ethylenically unsaturated mono- and/or dicarboxylic acids, or of α,β-ethylenically unsaturated sulfonic, phosphoric, or phosphonic acids or amides and anhydrides of α,β-ethylenically unsaturated mono- or dicarboxylic acids, or combinations thereof, preferably α,β-ethylenically unsaturated mono- or dicarboxylic acids, more preferably methacrylic acid and acrylic acid.

One or more embodiments include the methods of any of the preceding paragraphs, wherein the at least one ethylenically unsaturated surface-active monomer is in accordance with formula 2.

One or more embodiments include the methods of any of the preceding paragraphs, wherein at least one ethylenically unsaturated monomer having at least one silicon-comprising group is an alkoxysilyl-functional monomer, preferably a vinyltrialkoxysilane, more preferably vinyltrimethoxysilane or vinyltriethoxysilane.

One or more embodiments include the methods of any of the preceding paragraphs, wherein the weight of the at least one ethylenically unsaturated monomer having at least one silicon-comprising group is 0.2 wt.% to 10 wt.%, preferably 0.3 wt.% to 5 wt.%, more preferably 0.5 wt.% to 3 wt.%, based on the total weight of monomers.

One or more embodiments include the methods of any of the preceding paragraphs, further comprising adding at least one pigment after polymerization, preferably at least one organic pigment.

One or more embodiments include the methods of any of the preceding paragraphs, further comprising adding a mineral filler after polymerization.

DETAILED DESCRIPTION OF THE INVENTION

<u>Dispersions</u>

In some aspects, the present disclosure relates to methods for producing an organic-inorganic composite dispersion using radically-initiated emulsion polymerization of ethylenically unsaturated (and optionally other) monomers. One embodiment comprises adding to a reactor: (A) at least one ethylenically unsaturated monomer which has at least one silicon-comprising group; (B) at least one ethylenically unsaturated surface-active monomer according to Formulas 1 or 2 (below), where *a* is an integer from 0 to 5, *b* is an integer from 0 to 1, c is an integer from 1 to 3, *d* is an integer from 1 to 5, *n* is an integer from 4 to 15, preferably from 5 to 12, X is O or NH, M is an alkali metal ion or an ammonium ion, and R is C1-C30-alkyl, C2-C30-alkenyl, cycloalkyl, cycloalkenyl, aryl or acyl, preferably C6-C16-alkyl or aryl, in a weight of from 1 wt.% to 5 wt.%, based on the total weight of monomers; and (C) at least one additional monomer copolymerizable with monomers (A) and (B), wherein one or more initiators are added to the reactor before and/or during the emulsion polymerization; wherein colloidal silica is also added, preferably after the polymerization.

*Ethylenically unsaturated monomer with a silicon group* (*A*)

As noted, in some embodiments, the methods of preparing polymer dispersions involve emulsion polymerization including at least one ethylenically unsaturated monomer which has at least one silicon-comprising group ("monomer A"). In some embodiments, the at least one ethylenically unsaturated monomer which has at least one silicon-comprising group can comprise an ethylenically unsaturated monomer which has at least one alkoxysilyl group. Some examples include organoalkoxysilanes like vinyltrialkoxysilane, more specifically vinyltrimethoxysilane or vinyltriethoxysilane. Such organoalkoxysilanes can be compounds having an ethylenically unsaturated bond, i.e., having an unsaturated bond capable of free radical polymerization, which compounds have at least one alkoxysilane group.

Some further examples of organoalkoxysilanes that can be used include compounds of formula I or II:

(I

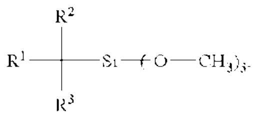

(II

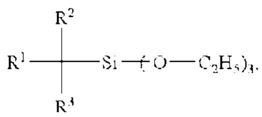

in which $R^1$ is $-(CH_2)_n-NH-R^4$, $-CH_2)_n-NH-[(CH_2)_m-NH]_o-R^4$ or $-(CH_2)_n-OR^5$, $-(CH_2)_n-CH=CH_2$ or $-(CH_2)_n-S-R^5$,
$R^2$ is hydrogen, $-(CH_2)_n-CH_3$ or one of the choices from $R^1$,
$R^3$ is hydrogen, $-(CH_2)_n-CH_3$ or one of the choices from $R^1$,
$R^4$ is hydrogen, $-(CH_2)_n-CH_3$ or $-CO-(CH_2)_m-CH_3$, and
$R^5$ is hydrogen, $-(CH_2-CH_2-O)_m-R^4$ or

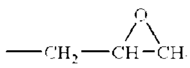

in which n and m, in each case independently of one another, are an integer between 0 and 12 and o is an integer between 0 and 5,
and provided that at least one of $R^1$, $R^2$, and $R^3$ is $-(CH_2)_n-CH=CH_2$.

Additional examples of silanes that can serve as the at least one ethylenically unsaturated monomer which has at least one silicon-comprising group are polyfunctional silanes. In some embodiments, these include compounds which, in addition to at least one silane group, have at least one primary, secondary or tertiary amino group, at least one alkylthio group or sulfhydryl group or at least one epoxide group. In some embodiments, organosilanes monomers which can be incorporated into the polymer include ethylenically unsaturated and alkoxysilane group-containing monomers of the formula $R^6Si(CH_3)_{0-2}(OR^7)_{3-1}$, in which $R^6$ has the meaning $CH_2=CR^8-(CH_2)_{0-1}$ or $CH_2=CR^8CO_2-(CH_2)_{1-3}$, $R^7$ is a straight-chain or branched, optionally substituted alkyl radical having 1 to 12 carbon atoms, which may be optionally interrupted by an ether group, and $R^8$ is hydrogen or methyl. Silanes of the formula $CH_2=CR^3-(CH_2)_{0-1}Si(CH_3)_{0-1}(OR^7)_{3-2}$ and $CH_2=CR^9CO_2-(CH_2)_3Si(CH_3)_{0-1}(OR^{10})_{3-2}$, in which $R^7$ is a straight-chain or branched, optionally substituted alkyl radical having 1 to 12 carbon atoms and $R^8$ is hydrogen or methyl, and $R^9$ and $R^{10}$ are, independently of each other, hydrogen or $C_1$-$C_6$-alkyl, can be used in some embodiments.

Additional silanes which can be used as the at least one ethylenically unsaturated monomer which has at least one silicon-comprising group in some embodiments are vinylmethyldimethoxysilane, vinyltriacetoxysilane, vinylmethyldiethoxysilane, vinylmethyldiisopropoxysilane, vinylmethyldi-n-butoxysilane, vinylmethyldi-sec-butoxysilane, vinylmethyldi-tert-butoxysilane, vinylmethyldi(2-methoxyisopropoxy)silane and vinylmethyldioctyloxysilane.

In addition, silanes of the formula $CH_2=CR^{11}-(CH_2)_{0-1}Si(OR^{12})_3$ and $CH_2=CR^2CO_2-(CH_2)_3Si(OR^1)_3$, in which $R^{12}$ is a branched or straight-chain alkyl radical having 1 to 4 carbon atoms and $R^{11}$ is hydrogen or methyl can be used as

the at least one ethylenically unsaturated monomer which has at least one silicon-comprising group in some embodiments.

Some examples of these are γ-(meth)acryloyloxypropyltris(2-methoxyethoxy)-silane, γ-(meth)acryloyloxypropyltrismethoxysilane, γ-(meth)acryloyloxypropyltrisethoxysilane, γ-(meth)acryloyloxypropyltris-n-propoxysilane, γ-(meth)acryloyloxypropyltrisisopropoxysilane, γ-(meth)acryloyloxypropyltrisbutoxysilane, γ-acryloyloxypropyltris(2-methoxyethoxy)silane, γ-acryloyloxypropyltrismethoxysilane, γ-acryloyloxypropyltrisethoxysilane, γ-acryloyloxypropyltris-n-propoxysilane, γ-acryloyloxypropyltrisisopropoxysilane, γ-acryloyloxypropyltrisbutoxysilane and vinyltris(2-methoxyethoxy)-silane, vinyltrismethoxysilane, vinyltrisethoxysilane, vinyltris-n-propoxysilane, vinyltrisisopropoxysilane and vinyltrisbutoxysilane. Said silane compounds can optionally also be used in the form of their (partial) hydrolysis products.

In some embodiments, the at least one ethylenically unsaturated monomer which has at least one silicon-comprising group can be present in an amount from 0.2 wt.% to 15 wt.%, from 0.2 wt.% to 10 wt.%, from 1 wt.% to 10 wt.%, from 2 wt.% to 10 wt.%, from 0.5 wt.% to 5 wt.%, preferably from 0.3 wt.% to 5 wt.%, more preferably from 0.5 wt.% to 3 wt.%, based on the total weight of monomers. This may be a monomer or a mixture of different monomers of this group.

*Alkoxysilane-functional compound*

In some embodiments of the methods described, instead of or in addition to the at least one ethylenically unsaturated monomer which has at least one silicon-comprising group, an alkoxysilane-functional compound having at least one amino, mercapto or epoxide group is added, preferably after completion of the emulsion polymerization. Examples include primary and secondary aminoalkylethoxysilanes, bis(3-triethoxysilylpropyl)amine, trifunctional propyltrimethoxysilane [$NH_2$-$(CH_2)_2$-NH-$(CH_2)_2$-NH-$(CH_2)_3$-$Si(OCH_3)_3$], 3-glycidyloxypropyltriethoxysilane, 3-mercaptopropyltrimethoxysilane, 3-aminopropyltrimethoxysilane, oligomeric diaminosilane system, glycidyltrimethoxy-functional silane, glycidyltriethoxy-functional silane, (3-glycidyloxypropyl)trimethoxysilane, N-(2-aminoethyl)(3-aminopropyl)trimethoxysilane, (3-aminopropyl)triethoxysilane, N-(2-aminoethyl)(3-aminopropyl)methyldimethoxysilane, and (3-aminopropyl)trimethoxysilane.

*Ethylenically unsaturated surface-active monomer (B)*

As noted, in some embodiments, the methods described involve adding at least one ethylenically unsaturated surface-active monomer ("monomer B"). In some embodiments, the at least one ethylenically unsaturated surface-active monomer is in accordance with Formulas 1 or 2, where *a* is an integer from 0 to 5, *b* is an integer from 0 to 1, c is an integer from 1 to 3, *d* is an integer from 1 to 5, *n* is an integer from 4 to 15, preferably from 5 to 12, X is O or NH, M is an alkali metal ion or an ammonium ion, and R is C1-C30-alkyl, C2-C30-alkenyl, cycloalkyl, cycloalkenyl, aryl or acyl, preferably C6-C16-alkyl or aryl.

Formula 1:

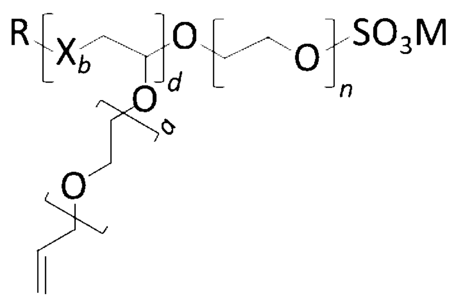

Formula 2:

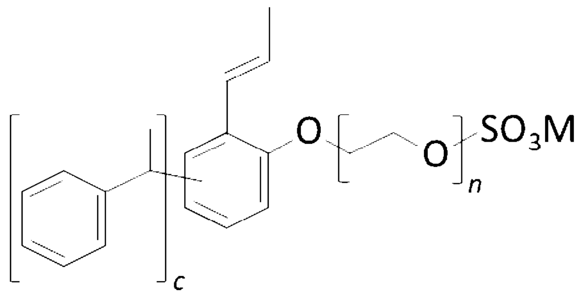

In some embodiments of Formula 1, *a* = 0, *b* = 0, *d* = 1, *n* = 10, M = $NH_4$, R = C9-alkyl + C11-alkyl. In some embodiments of Formula 1, *a* = 0, X = O, *b* = 1, *d* = 1, *n* = 10, M = $NH_4$, R = C10-14 alkyl (branched), C11-rich. In some embodiments of Formula 1, *a* = 4, X = O, *b* = 1, *d* = 1, *n* = 10, M = $NH_4$, R = phenyl. In some embodiments of Formula 1, *a* = 4, *b* = 0, *d* = 1, *n* = 10, M = $NH_4$, R = C10-alkyl. In some embodiments of Formula 2, *c* = 1-3, *n* = 10, M = $NH_4$.

In some embodiments, the at least one ethylenically unsaturated surface-active monomer can be present in a weight of from 0.5 wt.% to 5 wt.% (e.g., from 1 wt.% to 5 wt.%, from 0.5 wt.% to 3 wt.%, from 1 wt.% to 2.9 wt.%, or from 1 wt.% to 2.8 wt.%), based on the total weight of monomers. The inventors surprisingly found that the use of less ethylenically unsaturated surface-active monomer can lead to a considerable improvement in storage stability. For example, the inventors discovered that using significantly less than amounts of ethylenically unsaturated surface-active monomer taught in the art could yield gains in storage stability while providing the commercial benefits of less of this component. The reduced amount of at least one ethylenically unsaturated surface-active monomer can also have a positive effect on the color stability of white and colored paints and plasters after exterior weathering.

These ethylenically unsaturated surface-active monomers can be surfactants which may be incorporated into the copolymer during the emulsion polymerization, for example. In some embodiments, the at least one ethylenically unsaturated surface-active monomer can contain at least one anionic and/or nonionic group. For example, the at least one ethylenically unsaturated surface-active monomer can have at least one hydrophilic group, which can be nonionic, for example a polyglycol group, and/or at least one anionic group, for example a sulfate group. In some embodiments, the at least one ethylenically unsaturated surface-active monomer has at least one hydrophobic group, which can be, for example, an alkyl, cycloalkyl, alkenyl, cycloalkenyl, aryl or acyl group. In some embodiments, the at least one ethylenically unsaturated surface-active monomer has a vinyl group, an allyl group or a radical of an ethylenically unsaturated acid, such as an acrylic acid, methacrylic acid, crotonic acid, itaconic acid or maleic acid radical. In some embodiments, the at least one ethylenically unsaturated surface-active monomer preferably has from one to three nonionic or anionic emulsifying groups. In some embodiments, the emulsifying groups are polyalkylene glycol groups which can be anionically functionalized, for example with a sulfate group. In some embodiments, the at least one ethylenically unsaturated surface-active monomer has more than eight carbon atoms.

The inventors also surprisingly discovered that specific degrees of ethoxylation of the at least one ethylenically unsaturated surface-active monomer confer sufficient storage stability to the hybrid dispersions. In some embodiments, the at least one ethylenically unsaturated surface-active monomer can have a mean degree of ethoxylation of 18 or less (e.g., 17 or less, 16 or less, 15 or less, 14 or less, 13 or less, 12 or less, 11 or less, from 1 to 18, from 2 to 16, from 3 to 15, from 4 to 15, from 5 to 15, from 6 to 14, from 5 to 12, from 7 to 12, from 8 to 12, from 9 to 11, or about 10). Preferably the at least one ethylenically unsaturated surface-active monomer can have a mean degree of ethoxylation of from 4 to 15, more preferably from 5 to 12.

Some commercial examples of formulations comprising the at least one ethylenically unsaturated surface-active monomer can be Hitenol KH 1025, Hitenol AR 1025, Adeka Reasoap SR-1025, Emulsogen APG 1019, and Emulsogen CPA 100 XS.

*Esters of $\alpha,\beta$-ethylenically unsaturated carboxylic acids, vinyl esters of saturated carboxylic acids, vinylaromatic monomers or combinations*

In some embodiments, the methods described also involve adding monomers of esters of $\alpha,\beta$-ethylenically unsaturated carboxylic acids, vinyl esters of saturated carboxylic acids, vinylaromatic monomers or combinations thereof, for example C1-C8 alkyl esters of acrylic and methacrylic acid. Thus, in some embodiments, a (meth)acrylate, a vinyl ester of a saturated carboxylic acid and/or a vinylaromatic monomer, is used to form the skeleton of the polymer which is used for the preparation of the polymer dispersions described above. In some embodiments, these monomers can be added to the dispersion in an amount of at least 40% by weight, preferably 50 to 95% by weight, based on the total weight of monomers. This may be a monomer or a mixture of different monomers of this group.

Some examples of monomers of this group are alkyl(meth)acrylates (i.e. alkyl esters of acrylic acid or of methacrylic acid). Examples of these are methyl acrylate, ethyl acrylate, propyl acrylate, butyl acrylate, 2-ethylhexyl

acrylate, methyl methacrylate, ethyl methacrylate, propyl methacrylate, n-butyl methacrylate, tert-butyl methacrylate, isobutyl methacrylate, 2-ethylhexyl methacrylate, 2-octyl acrylate, isobornyl methacrylate, isobornyl acrylate, cyclohexyl methacrylate and cyclohexyl acrylate. These alkyl esters can be used alone or in the form of a combination of two or more esters.

In addition to, or instead of, the monomers mentioned, alkyl(meth)acrylates containing hydroxyl groups or containing epoxide groups can be used in some embodiments. If an alkyl(meth)acrylate containing hydroxyl groups or containing epoxide groups is used as the alkyl(meth)acrylate, the polymer dispersion prepared therewith also contains a hydroxyl group or an epoxide group. Some examples of alkyl(meth)acrylates containing hydroxyl groups include hydroxymethyl methacrylate, hydroxyethyl acrylate, hydroxypropyl methacrylate, hydroxypropyl acrylate, hydroxybutyl methacrylate and hydroxybutyl acrylate. These alkyl esters can be used alone or in the form of a combination of two or more esters. Some examples of alkyl(meth)acrylates containing epoxide groups include glycidyl methacrylate or glycidyl acrylate.

In addition to, or instead of, the (meth)acrylates, in some embodiments it is possible to use vinyl esters of saturated carboxylic acids as main monomers in some embodiments. In some embodiments, these can be vinyl esters of saturated carboxylic acids having 1 to 18 carbon atoms. Some examples are vinyl esters of carboxylic acids having 1 to 4 carbon atoms, such as, for example, vinyl formate, vinyl acetate, vinyl propionate, vinyl isobutyrate, vinyl pivalate and vinyl 2-ethylhexanoate; or vinyl esters of saturated, branched monocarboxylic acids having 9, 10 or 11 carbon atoms in the acid radical; or vinyl esters of relatively long-chain, saturated and unsaturated fatty acids, for example vinyl esters of fatty acids having 8 to 18 carbon atoms, such as, for example, vinyl laurate and vinyl stearate; or vinyl esters of benzoic acid or of p-tert-butylbenzoic acid and mixtures thereof.

In addition to, or instead of, the (meth)acrylates and/or of the vinyl esters, in some embodiments vinylaromatic hydrocarbons can be used as main monomers. Some examples of these are styrene, vinyltoluene and alpha-methylstyrene. In some embodiments, at least 5 wt.% (e.g., at least 7 wt.%, at least 8 wt.%, at least 10 wt.%, at least 12 wt.%, at least 15 wt.%, at least 20 wt.%, at least 25 wt.%, from 5 wt.% to 50 wt.%, or from 10 wt.% to 50 wt.%) of the monomers based on esters of $\alpha,\beta$-ethylenically unsaturated carboxylic acids, vinyl esters of saturated carboxylic acids, vinylaromatic monomers or combinations thereof (preferably C1-C8 alkyl esters of acrylic and methacrylic acid) have a Hansch parameter greater than 2.5. In some embodiments, homopolymers made from the monomers based on esters of $\alpha,\beta$-ethylenically unsaturated carboxylic acids, vinyl esters of saturated carboxylic acids, vinylaromatic monomers or combinations thereof with a Hansch parameter greater than 2.5 have a glass transition temperature greater than 0° C. Hansch parameters are a measure for the hydrophobicity of monomers and polymers obtained from these monomers. The Hansch parameters of the monomers are calculated by the method as outlined in patent application WO 2018/015169 A1. The Hansch parameters for a selective set of monomers are: vinyl acetate: 0.73, methyl methacrylate: 1.28, n-butyl acrylate: 2.20, butyl methacrylate: 2.75, styrene: 2.89, 2-ethylhexyl acrylate: 4.09, isobornyl methacrylate: 4.76.

*$\alpha,\beta$-ethylenically unsaturated mono- and/or dicarboxylic acids, or $\alpha,\beta$-ethylenically unsaturated sulfonic, phosphoric, or phosphonic acids or amides and anhydrides of $\alpha,\beta$-ethylenically unsaturated mono- or dicarboxylic acids, or combinations thereof*

In some embodiments, the methods described also involve adding monomers of $\alpha,\beta$-ethylenically unsaturated mono- and/or dicarboxylic acids, or of $\alpha,\beta$-ethylenically unsaturated sulfonic, phosphoric, or phosphonic acids or amides and anhydrides of $\alpha,\beta$-ethylenically unsaturated mono- or dicarboxylic acids, or combinations thereof (preferably $\alpha,\beta$-ethylenically unsaturated mono- or dicarboxylic acids, and more preferably methacrylic acid and acrylic acid). In some embodiments, the monomers of this group are added to the dispersion in an amount from 0.1 to 10% by weight, preferably 0.5 to 6% by weight, particularly preferably 1 to 4% by weight. This may be a monomer or a mixture of different monomers of this group.

Thus, some embodiments of the disclosed methods involve adding monomers of carboxylic acids capable of free radical polymerization, amides thereof, sulfonic acids, phosphoric acids, phosphonic acids or mixtures thereof in the preparation of the polymer dispersion. These monomers include compounds which carry at least one carboxyl, carboxamide, sulfo, phosphoric acid or phosphonic acid group in the direct neighborhood of the double bond unit or linked thereto via a spacer.

Some specific embodiments of the methods described therefore involve adding monomers of ethylenically unsaturated $C_3$-$C_8$-monocarboxylic acids, such as acrylic acid, methacrylic acid and crotonic acid, and the anhydrides and amides thereof; ethylenically unsaturated $C_4$-$C_8$-dicarboxylic acids, such as maleic acid, fumaric acid, itaconic acid and citraconic acid, and the mono- or bisamides thereof and monoesters with $C_1$-$C_{12}$-alkanols, preferably $C_1$-$C_4$-alkanols, such as, monomethyl maleate and mono-n-butyl maleate. Further embodiments include adding to the compositions described adding ethylenically unsaturated, ionic monomers like ethylenically unsaturated sulfonic acids, in particular ethylenically unsaturated sulfonic acids having 2-8 carbon atoms, such as vinylsulfonic acid, 2-acrylamido-2-methylpropanesulfonic acid, 2-acryloyloxyethanesulfonic acid and 2-methacryloyloxyethanesulfonic acid, 2-acryloyloxy- and 3-methacryloyloxypropanesulfonic acid, vinylbenzenesulfonic acid, and ethylenically unsaturated phosphoric acids having 2-8 carbon atoms, such as vinylphosphonic acid.

In addition to or instead of acids, some embodiments use the salts thereof, like the alkali metal or ammonium salts thereof, for example, the sodium salts thereof, such as the sodium salts of vinylsulfonic acid and of 2-acrylamidopropanesulfonic acid.

*Additional monomers*

As noted, in some embodiments, the methods described also involve adding at least one additional monomer copolymerizable with the above-described monomers (A) and (B). These can be other monomers capable of free radical polymerization which differ from the monomers described above, for example. In some embodiments, these additional monomers include, for example, ethylenically unsaturated, nonionic functional monomers, such as water-soluble N-vinyllactams, for example, N-vinylpyrrolidone. Additional examples include: nitriles of ethylenically unsaturated $C_3$-$C_8$-carboxylic acids, such as acrylonitrile and methacrylonitrile, and adhesion-improving and crosslinking monomers, conjugated $C_4$-$C_8$-dienes, such as 1,3-butadiene, isoprene and chloroprene, or aliphatic ethylenically unsaturated, optionally halogen-substituted hydrocarbons, such as ethylene, propylene, butylene, vinyl chloride or vinylidene chloride. In some embodiments, the at least one additional monomer copolymerizable with the above-described monomers (A) and (B) can be present in an amount up to 30 wt.%, based on the total amount of monomers (e.g., up to 20 wt.%, up to 10 wt.%, from 0.1 wt.% to 30 wt.%, from 0.5 wt.% to 20 wt.%, from 1 wt.% to 20 wt.%, from 1 wt.% to 15 wt.%, or from 2 wt.% to 10 wt.%).

*Silica*

As noted, embodiments of the methods of the disclosure involve adding colloidal silicas. Colloidal silica suitable in the present disclosure is preferably an aqueous colloidal dispersion or suspension of ultrafine silica particles, for example. In embodiments, the particle diameter of primary particles in this dispersion or suspension is preferably from 2 nm to 100 nm (e.g., from 5 nm to 90 nm or from 10 nm to 80 nm) and the primary particles are spherical. The colloidal silica used according to the present disclosure is preferably an amorphous anionic silica (=anionic surface charges of the particles, which can be compensated by cationic counterions). Dispersions in which the particles are stabilized by anionic surface charges can contain alkali metal or ammonium counterions, in particular sodium, potassium or ammonium counterions, are preferably used. Furthermore, the colloidal silica may be a monodisperse or a polydisperse silica, for example. In some embodiments, the colloidal silica is can be used in an amount of from 5 to 200 parts by weight (e.g., from 10 to 150 parts by weight, from 20 to 100 parts by weight, from 25 to 75 parts by weight, or from 30 to 50 parts by weight), based on the amount of copolymer.

In some embodiments of the methods described, colloidal silica may be added in the emulsion polymerization itself during the preparation of the aqueous polymer dispersion. However, in preferred embodiments, the colloidal silica is added to the aqueous polymer dispersion after the preparation thereof and/or during the preparation of the plaster and render or paint formulation. Addition of the colloidal silica after the preparation of the polymer dispersion is particularly preferred. Due to the silicone-functionalization of the polymer, organic-inorganic composite particles are formed upon addition of the silica particles.

*Protective colloids*

Apart from the surface-active monomers (B) which can be incorporated in the form of polymerized units in some embodiments, the polymer dispersions prepared according to the disclosed methods can optionally be additionally stabilized by protective colloids and/or by emulsifiers. These may already be present during the emulsion polymerization or may be added thereafter. However, it is preferred not to use such protective colloids or emulsifiers.

When used, in some embodiments the protective colloids are polymeric compounds, for example having molecular weights greater than 2000 g/mol, whereas in some embodiments the emulsifiers are low molecular weight compounds whose relative molecular weights are, for example, below 2000 g/mol. In some embodiments, either or both of these compounds are added during the polymerization itself or can optionally also be subsequently added after the polymerization.

Some examples of protective colloids are starch, gum arabic, alginates or tragacanth, methyl-, ethyl-, hydroxyethyl- or carboxymethylcellulose or starch modified by means of saturated acids or epoxides, and synthetic substances, such as polyvinyl alcohol (with or without residual acetyl content) or partly esterified or acetalated polyvinyl alcohol or polyvinyl alcohol etherified with saturated radicals, and polypeptides, such as gelatin, but also polyvinylpyrrolidone, polyvinylmethylacetamide or poly(meth)acrylic acid. Polyvinyl alcohol is preferred.

In some embodiments, the proportion by weight of such optionally present protective colloids, based on the total

amount of the monomers used, is up to 15 wt.%.

In some embodiments, it is advantageous in the preparation of the dispersions to use nonionic and/or anionic emulsifiers in addition or instead of the protective colloids. Some examples of nonionic emulsifiers are araliphatic and aliphatic nonionic emulsifiers, such as, for example, ethoxylated mono-, di- and trialkylphenols (degree of ethoxylation: 3 to 50, alkyl radical: $C_4$ to $C_9$), ethoxylates of long-chain alcohols (degree of ethoxylation: 3 to 50, alkyl radical: $C_8$ to $C_{36}$) and polyethylene oxide/polypropylene oxide block copolymers. Ethoxylates of long-chain alkanols (alkyl radical: $C_{10}$ to $C_{22}$, average degree of ethoxylation: 3 to 50) are preferably used and among these those based on native alcohols, Guerbet alcohols or oxo alcohols having a linear or branched $C_{12}$-$C_{18}$-alkyl radical and a degree of ethoxylation of 8 to 50 are particularly preferably used.

Additional examples of suitable anionic emulsifiers are alkali metal and ammonium salts of alkyl sulfates (alkyl radical: $C_8$ to $C_{18}$), alkyl phosphonates (alkyl radical: $C_8$ to $C_{18}$), of sulfuric acid monoesters and phosphoric acid mono- and diesters of ethoxylated alkanols (degree of ethoxylation: 2 to 50, alkyl radical: $C_8$ to $C_{22}$) and of ethoxylated alkylphenols (degree of ethoxylation: 3 to 50, alkyl radical: $C_4$ to $C_9$), of alkanesulfonic acids (alkyl radical: $C_{12}$ to $C_{18}$), of alkylarylsulfonic acids (alkyl radical: $C_9$ to $C_{18}$), of sulfosuccinic acid monoesters and sulfosuccinic acid diesters of alkanols (alkyl radical: $C_8$ to $C_{22}$) and ethoxylated alkanols (degree of ethoxylation: 2 to 50, alkyl radical: $C_8$ to $C_{22}$) and ethoxylated alkylphenols (degree of ethoxylation: 3 to 50, alkyl radical: $C_4$ to $C_9$). In some embodiments, the emulsifiers mentioned are used as industrial mixtures, the data on length of alkyl radical and EO chain being based on the respective maximum of the distributions occurring in the mixtures.

In some embodiments, up to about 5% by weight of emulsifiers, preferably up to 2% by weight, such as up to 1% by weight, based on the total amount of the monomers used for the preparation of the dispersions, are used.

## Additional Components for Coating Compositions

### *Silicates and silicone resins*

In some embodiments of the disclosure where the dispersions are used in coating compositions (e.g., paints and/or plasters), water-soluble silicate and/or silicone resin can also be added. Some examples of water-soluble silicates include water-soluble alkali metal silicate, in particular sodium or potassium silicate. In some embodiments, water-soluble silicates can be present in an amount of from 0 to 40% by weight, based on the total formulation (e.g., from 10 to 30% by weight). Some examples of silicone resins are poly(dialkylsiloxanes), in particular poly(dimethylsiloxanes). In some embodiments, silicone resins can be present in an amount of from 0 to 10% by weight, based on the total formulation (e.g., from 4 to 8% by weight). These may be crosslinking or noncrosslinking systems.

### *Pigments and fillers*

In some embodiments of the disclosure, where the dispersions are used in coating compositions (e.g., paints and/or plasters), the disclosed methods can also involve adding pigments and/or fillers. These can be inorganic and/or organic solids which can be used as powders, for example. In the context of this description, pigments are understood as meaning solids which have a refractive index greater than or equal to 1.75. In the context of this description, fillers are understood as meaning solids which have a refractive index of less than 1.75.

In some embodiments that include pigments, the pigments have a mean diameter for the primary particle of less than or equal to 1 μm (e.g., from 0.05 to 0.8 μm or from 0.1 to 0.5 μm) determined by sedimentation analysis according to DIN 66115. Examples of inorganic pigments are metal oxides, such as titanium dioxide, iron oxide or zinc oxide. Examples of organic pigments are phthalocyanines, in particular phthalocyanine blue, or diaryl pigments, azo pigments or quinacridone pigments. Preferably, the composition comprises at least one organic pigment.

In embodiments of the disclosed methods for producing compositions which are used mainly as plasters and renders, the methods can also involve adding mineral fillers having a high proportion of coarse particles. When added, in some embodiments, the mineral filler can contain a proportion of at least 40% by weight of particles having a diameter of at least 40 μm. In some embodiments, the mean diameter of the particles (determined by sedimentation analysis according to DIN 66115) of the mineral filler is from 2 to 40 μm. Nonlimiting examples of mineral fillers are alkaline earth metal oxides, alkaline earth metal carbonates and/or silicate fillers, in particular calcium carbonate, mica, feldspar, kaolin, quartz powders and/or particulate quartz fractions and marble powders and/or particulate marble fractions.

In embodiments of the disclosure related to making plasters and renders, the pigments and/or fillers can be present in an amount of from 20 wt.% to 80 wt.%, based on the total formulation (e.g., from 30 wt.% to 70 wt.%, from 40 wt.% to 80 wt.%), for example.

In embodiments of the disclosure related to making paints, the pigments and/or fillers can be present in an amount of from 20 wt.% to 80 wt.% by weight, based on the total formulation, in particular in an amount of from 40 wt.% to 70 wt.% by weight, for example.

*Additional additives*

Some of the additional additives and further constituents which may be added in some embodiments of the methods of the present disclosure include film formation auxiliaries, such as mineral spirit, Texanol®, TxiB®, butylglycol, butyldiglycol, butyldipropylene glycol and butyltripropylene glycol; plasticizers, such as dimethyl phthalate, diisobutyl phthalate, diisobutyl adipate, Coasol B® and Plastilit 3060®; wetting agents, such as AMP 90®, TegoWet 280®, Fluowet PE®; thickeners, such as polyacrylates or polyurethanes, such as Borchigel L75® and Tafigel PUR 60®; antifoams, e.g. mineral oil or silicone antifoams; UV screening agents, such as Tinuvin 1130®, subsequently added stabilizing emulsifiers or polymers, such as polyvinyl alcohol or cellulose ether, and rheology-modifying auxiliaries, e.g. polyacrylate or polyurethane thickeners, for example.

Emulsion Polymerization

The dispersions according to the present disclosure can be prepared by emulsion polymerization. In some embodiments, the polymer dispersions are prepared by emulsion polymerization comprising adding to a reactor: (A) at least one ethylenically unsaturated monomer which has at least one silicon-comprising group; (B) at least one ethylenically unsaturated surface-active monomer according to Formulas 1 or 2 (above), where *a* is an integer from 0 to 5, *b* is an integer from 0 to 1, *c* is an integer from 1 to 3, *d* is an integer from 1 to 5, *n* is an integer from 4 to 15, preferably from 5 to 12, X is O or NH, M is an alkali metal ion or an ammonium ion, and R is C1-C30-alkyl, C2-C30-alkenyl, cycloalkyl, cycloalkenyl, aryl or acyl, preferably C6-C16-alkyl or aryl, in a weight of from 1 wt.% to 5 wt.% (e.g., from 1 wt.% to 2.9 wt.%), based on the total weight of monomers; and at least one additional monomer copolymerizable with monomers (A) and (B). In some embodiments, colloidal silica is added to the dispersion, preferably after polymerization.

In some embodiments, the methods according to the present disclosure can be performed by free radical emulsion polymerization involving the addition of one or more initiators to the reactor before and/or during the emulsion polymerization. Examples of emulsion polymerization methods include a batch process in which a polymerization reactor is charged with water and a surface-active monomer (e.g., at least one ethylenically unsaturated surface-active monomer). In some embodiments, at least a portion of the additional monomers can also be added to the polymerization reactor, for example as an aqueous emulsion (either before or after the temperature of the reactor is increased). To start the polymerization, the temperature of the mixture is increased and suitable additives, such as a polymerization initiator, are added to the mixture, for example. In the monomer metering process of one embodiment, water and surface-active monomer are fed to the polymerization reactor. The temperature of the mixture is increased, and at least one additional monomeric component is added to the mixture. In the monomer emulsion metering process of another embodiment, at least one monomeric component is first emulsified with the surface-active monomer and water before the addition of the desired additional monomer(s), and the resulting emulsion is then added to the mixture.

The emulsion polymerization can therefore be carried out by the batch process, by the feed process, by the combined batch/feed process or by the continuous process, for example. Preferably, the feed process is carried out such to allow a small amount of the monomers to be pre-polymerized (in-situ seed) before the remainder of the monomers are metered in the form of an aqueous emulsion. In addition to the preparation of single-phase emulsion polymers, the preparation of multiphase emulsion polymers is also possible. This can be carried out by polymerization of a plurality of different monomer combinations, preferably two different monomer combinations, in successive stages. However, single-phase polymer dispersions are preferably prepared.

Examples of free radical initiators that can be used in some embodiments include: hydrogen peroxide, benzoyl peroxide, cyclohexanone peroxide, isopropyl cumyl hydroperoxide, persulfates of potassium, of sodium and of ammonium, peroxides of saturated monobasic aliphatic carboxylic acids having an even number of carbon atoms and a Cs-$C_{12}$ chain length, tert-butyl hydroperoxide, di-tert-butyl peroxide, diisopropyl percarbonate, azoisobutyronitrile, acetylcyclohexanesulfonyl peroxide, tert-butyl perbenzoate, tert-butyl peroctanoate, bis(3,5,5-trimethyl)hexanoyl peroxide, tert-butyl perpivalate, hydroperoxypinane, p-methane hydroperoxide. The abovementioned compounds can also be used within redox systems, transition metal salts, such as iron(II) salts, or other reducing agents being concomitantly used. Alkali metal salts of oxymethanesulfinic acid, hydroxylamine salts, sodium dialkyldithiocarbamate, sodium bisulfite, ammonium bisulfite, sodium dithionite, diisopropyl xanthogen disulfide, ascorbic acid, tartaric acid, isoascorbic acid, boric acid, urea and formic acid can be concomitantly used as reducing agents. Water-soluble persulfates, in particular ammonium persulfate or sodium persulfate, are preferably used for initiating polymerization.

Examples of chain transfer reagents that can be used in some embodiments are, inter alia, alcohols, such as methanol, ethanol, propanol and butenol, aldehydes and ketones, such as acetone, methyl ethyl ketone, cyclohexane, acetophenone, acetaldehyde, propionaldehyde, n-butylaldehyde, furfural and benzaldehyde, and mercaptans, such as dodecyl mercaptan, lauryl mercaptan, thioglycolic acid, octyl thioglycolate and thioglycerol. Such chain-transfer reagents can be used alone or in the form of a combination of two or more thereof, for example.

Some examples of aqueous media include water and aqueous alcoholic solutions. For optimal performance

characteristics and costs, water is preferred. Water of all kinds, for example tap water or ion exchanger water, is suitable.

The aforementioned surface-active monomer can likewise either be initially introduced completely at the beginning of the polymerization or partly initially introduced and partly metered or completely metered during the polymerization, for example. In some embodiments, the polymerization temperature is in the range from 45° C to 120° C, preferably in the range from 45° C to 100° C, and most preferably in the range from 60° C to 90° C.

In some embodiments, after the end of the polymerization, a further, preferably chemical aftertreatment, in particular with redox catalysts such as combinations of the abovementioned oxidizing agents and reducing agents, can follow for demonomerization. Further, in some embodiments, residual monomer present can be removed, for example by physical demonomerization, i.e. removed by distillation (in particular via steam distillation) or by stripping with an inert gas. A combination of physical and chemical methods which permits a reduction of the residual monomers to very low contents (<1000 ppm, preferably <100 ppm) is particularly efficient.

In some embodiments, the methods of the present disclosure can include simple mixing of the intended amounts of the individual components by means of a conventional stirrer or the like. Thus, in some embodiments, the polymer dispersion, which contains a surface-active group and a silicon-comprising group, is combined with colloidal silica. The methods disclosed are therefore characterized by stable physical properties and excellent performance characteristics of the final products.

Carrying out an emulsion polymerization by these methods leads to the production of a polymer dispersion in which the polymer particles, which contain at least a silicon-comprising group and an emulsifying group, are dispersed in water.

In some embodiments, the choice of the exact monomer combinations used is selected so that the glass transition temperature(s) desired for the intended use are obtained. In some embodiments, copolymers whose glass transition temperatures are in the range from -10° C to +40° C, preferably from 0° C to +30° C, are prepared. The glass transition temperatures are determined for the purposes of the present description by means of differential scanning calorimetry (DSC) according to DIN 53765. The sample is dried at 130° C. for 1 hour, cooled and then heated at a heating rate of 10 K/minute.

The aqueous polymer dispersions prepared according to the disclosure can have solids contents of from 30 to 60% by weight, preferably from 40 to 55% by weight, for example.

The compositions produced from the methods described can, in some embodiments, be used in the construction sector, namely as plasters and renders or as paints. These coatings are preferably applied as top coats on an external thermal insulation composite system (ETICS). The present invention also relates to these uses.

The following examples serve for illustrating the invention. The parts and percentages stated in the examples are based on weight, unless noted otherwise.

## EXAMPLES

### *Example 1 (Comparative)*

Example 3 of US 2010/0144925 A1 was reproduced. The properties of the resulting organic-inorganic composite dispersion are summarized in Table 1.

### *Example 2 (Inventive)*

Example 3 of US 2010/0144925 A1 was reproduced with the following changes: The active component of Hitenol KH 1025 (DKS) was used as Emulsifier D. Hitenol KH 1025 is a 25% active aqueous solution of an active component according to Formula 1 with a = 0, $b$ = 0, $d$ = 1, $n$ = 10, M = $NH_4$, and R = C9-alkyl + C11-alkyl. The amount of active component of Hitenol KH 1025 in the initially introduced mixture was 0.6 g, while its amount in the monomer emulsion was 18.6 g. The amount of water in the monomer emulsion was reduced by 57.6 g to account for the additionally introduced water through Hitenol KH 1025. The properties of the resulting organic-inorganic composite dispersion are summarized in Table 1.

### *Example 3 (Inventive)*

Example 3 of US 2010/0144925 A1 was reproduced with the following changes: The active component of Hitenol AR 1025 (DKS) was used as Emulsifier D. Hitenol AR 1025 is a 25% active aqueous solution of an active component according to Formula 2 with c = 1-3, $n$ = 10, M = $NH_4$. The amount of active component of Hitenol AR 1025 in the initially introduced mixture was 0.6 g, while its amount in the monomer emulsion was 18.6 g. The amount of water in the monomer emulsion was reduced by 57.6 g to account for the additionally introduced water through Hitenol AR 1025. The properties of the resulting organic-inorganic composite dispersion are summarized in Table 1.

*Example 4 (Comparative)*

Example 3 of US 2010/0144925 A1 was reproduced with the following changes: The active component of Hitenol AR 2020 (DKS) was used as Emulsifier D. Hitenol AR 2020 is a 20% active aqueous solution of an active component according to Formula 2 with c = 1-3, *n* = 20, M = $NH_4$. The amount of active component of Hitenol AR 2020 in the initially introduced mixture was 0.6 g, while its amount in the monomer emulsion was 18.6 g. The amount of water in the monomer emulsion was reduced by 76.8 g to account for the additionally introduced water through Hitenol AR 2020. The properties of the resulting organic-inorganic composite dispersion are summarized in Table 1.

*Example 5 (Comparative)*

Example 3 of US 2010/0144925 A1 was reproduced with the following changes: The active component of Hitenol AR 3025 (DKS) was used as Emulsifier D. Hitenol AR 3025 is a 25% active aqueous solution of an active component according to Formula 2 with c = 1-3, *n* = 30, M = $NH_4$. The amount of active component of Hitenol AR 3025 in the initially introduced mixture was 0.6 g, while its amount in the monomer emulsion was 18.6 g. The amount of water in the monomer emulsion was reduced by 57.6 g to account for the additionally introduced water through Hitenol AR 3025. The properties of the resulting organic-inorganic composite dispersion are summarized in Table 1.

*Example 6 (Inventive)*

Example 3 of US 2010/0144925 A1 was reproduced with the following changes: The active component of Adeka Reasoap SR-1025 (Adeka) was used as Emulsifier D. Adeka Reasoap SR-1025 is a 25% active aqueous solution of an active component according to Formula 1 with *a* = 0, X = O, *b = 1, d = 1, n* = 10, M = $NH_4$, R = C10-14 alkyl (branched), C11-rich. The amount of active component of Adeka Reasoap SR-1025 in the initially introduced mixture was 0.6 g, while its amount in the monomer emulsion was 18.6 g. The amount of water in the monomer emulsion was reduced by 57.6 g to account for the additionally introduced water through Adeka Reasoap SR-1025. The properties of the resulting organic-inorganic composite dispersion are summarized in Table 1.

*Example 7 (Comparative)*

Example 3 of US 2010/0144925 A1 was reproduced with the following changes: Adeka Reasoap SR-20 (Adeka) was used as Emulsifier D. Adeka Reasoap SR-20 is a copolymerizable emulsifier according to Formula 1 with *a* = 0, X = O, *b* = 1, *d* = 1, *n* = 20, M = $NH_4$, R = C10-14 alkyl (branched), C11-rich. The amount of Adeka Reasoap SR-20 in the initially introduced mixture was 0.6 g, while its amount in the monomer emulsion was 18.6 g. The properties of the resulting organic-inorganic composite dispersion are summarized in Table 1.

*Example 8 (Comparative)*

Example 3 of US 2010/0144925 A1 was reproduced with the following changes: Adeka Reasoap SR-20 (Adeka) was used as Emulsifier D. Adeka Reasoap SR-20 is a copolymerizable emulsifier according to Formula 1 with *a* = 0, X = O, *b* = 1, *d = 1, n* = 20, M = $NH_4$, R = C10-14 alkyl (branched), C11-rich. The amounts of Emulsifier D remained unchanged, both in the initially introduced mixture and in the monomer emulsion. The properties of the resulting organic-inorganic composite dispersion are summarized in Table 1.

*Example 9 (Inventive)*

Example 3 of US 2010/0144925 A1 was reproduced with the following changes: The active component of Emulsogen APG 1019 (Clariant) was used as Emulsifier D. Emulsogen APG 1019 is a 90% active aqueous solution of an active component according to Formula 1 with *a* = 4, X = O, *b* = 1, *d* = 1, *n* = 10, M = $NH_4$, R = phenyl. The amount of active component of Emulsogen APG 1019 in the initially introduced mixture was 6.6 g, while its amount in the monomer emulsion was 17.4 g. The properties of the resulting organic-inorganic composite dispersion are summarized in Table 1.

*Example 10 (Comparative)*

Example 3 of US 2010/0144925 A1 was reproduced with the following changes: The active component of Emulsogen APG 2019 (Clariant) was used as Emulsifier D. Emulsogen APG 2019 is a 90% active aqueous solution of an active component according to Formula 1 with *a* = 4, X = O, *b* = 1, *d* = 1, *n* = 20, M = $NH_4$, R = phenyl. The amount of active component of Emulsogen APG 2019 in the initially introduced mixture was 6.6 g, while its amount in the monomer emulsion

was 17.4 g. The properties of the resulting organic-inorganic composite dispersion are summarized in Table 1.

*Example 11 (Inventive)*

Example 3 of US 2010/0144925 A1 was reproduced with the following changes: The active component of Emulsogen CPA 100 XS (Clariant) was used as Emulsifier D. Emulsogen CPA 100 XS is a 90% active aqueous solution of an active component according to Formula 1 with $a = 4$, $b = 0$, $d = 1$, $n = 10$, $M = NH_4$, R = C10-alkyl. The amount of Emulsogen CPA 100 XS in the initially introduced mixture was 1.2 g, while its amount in the monomer emulsion was 18.0 g. The properties of the resulting organic-inorganic composite dispersion are summarized in Table 1.

*Example 12 (Inventive)*

Example 2 was reproduced with the following changes: 295.8 g methyl methacrylate was replaced by 255 g isobornyl methacrylate and the amount of n-butyl acrylate was adjusted to 345 g. The properties of the resulting organic-inorganic composite dispersion are summarized in Table 1.

*Example 13 (Inventive)*

Example 3 was reproduced with the following change: 30 g methyl methacrylate was replaced by styrene. The properties of the resulting organic-inorganic composite dispersion are summarized in Table 1.

*Example 14 (Comparative)*

Example 3 of US 2010/0144925 A1 was reproduced with the following changes: The active component of Emulsogen EPA 073 (Clariant) was used instead of Emulsifier D. Emulsogen EPA 073 is a 27% active aqueous solution of an sodium undecyl ether sulfate with 7 moles EO. The amount of the active component of Emulsogen EPA 073 in the initially introduced mixture was 1.8 g, while its amount in the monomer emulsion was 18.0 g. The amount of water in the monomer emulsion was reduced by 53.5 g to account for the additionally introduced water through Emulsogen EPA 073. The properties of the resulting organic-inorganic composite dispersion are summarized in Table 1.

**Table 1:** Composition and properties of the polymer dispersions

| Example No. | copolym. emulsifie r (wt %)[1] | EO (mol)[2] | Solid content (%)[3] | Brookfield viscosity (initial, mPa s)[4] | pH | $d_w$ (nm)[5] | Tg (°C) [6] | Brookfield viscosity (after storage[7], mPa s)[4] |
|---|---|---|---|---|---|---|---|---|
| 1 (comp.) | 5.7 | 10[8] | 45.2 | 38 | 8.2 | 130 | 21.2 | 9040 |
| 2 (inv.) | 2.9 | 10 | 45.1 | 24 | 8.3 | 130 | 22.9 | <100 |
| 3 (inv.) | 2.9 | 10 | 44.9 | 23 | 8.4 | 140 | 22.2 | <100 |
| 4 (comp.) | 2.9 | 20 | 45.2 | 25 | 8.3 | 150 | 21.0 | 7650 |
| 5 (comp.) | 2.9 | 30 | 44.8 | 26 | 8.3 | 150 | 20.6 | coagulated |
| 6 (inv.) | 2.9 | 10 | 45.3 | 24 | 8.2 | 130 | 21.3 | <100 |
| 7 (comp.) | 2.9 | 20 | 44.7 | 25 | 8.4 | 150 | 21.7 | coagulated |
| 8 (comp.) | 5.7 | 20 | 45.5 | 80 | 8.4 | 150 | 22.0 | coagulated[9] |
| 9 (inv.) | 3.7 | 10 | 45.4 | 24 | 8.5 | 160 | 22.2 | <100 |
| 10 (comp.) | 3.7 | 20 | 46.0 | 25 | 8.4 | 140 | 20.2 | 26500 |
| 11 (inv.) | 2.9 | 10 | 45.5 | 20 | 8.2 | 150 | 20.8 | <100 |
| 12 (inv.) | 2.9 | 10 | 45.1 | 23 | 8.2 | 120 | 18.5 | <100 |
| 13 (inv.) | 2.9 | 10 | 45.5 | 24 | 8.4 | 130 | 20.9 | <100 |

(continued)

| Example No. | copolym. emulsifie r (wt %)[1] | EO (mol)[2] | Solid content (%)[3] | Brookfield viscosity (initial, mPa s)[4] | pH | $d_w$ (nm)[5] | Tg (°C) [6] | Brookfield viscosity (after storage[7], mPa s)[4] |
|---|---|---|---|---|---|---|---|---|
| 14 (comp.) | 3.0[10] | 7 | 45.6 | 20 | 8.4 | 120 | 20.8 | 13390 |

[1] total amount of copolymerizable emulsifier (in US 2010/0144925 A1 refered to as "Emulsifier D") based on the total amount of monomers in the polymer dispersion
[2] mean degree of ethoxylation (parameter *n* in Formulas 1 and 2).
[3] Gravimetric determination after 24 h drying at 110°C
[4] Measurement conditions: 20°C, 20 rpm, spindle 2 (<100 mPas) or spindle 5-7 (>5000 mPas)
[5] Weight-average particle diameter as determined by a Beckman Coulter LS 13320 Particle Size Analyzer
[6] Glass transition temperature as measured by differential scanning calorimetry (DSC) according to ISO 16805
[7] 15 months at room temperature
[8] The degree of ethoxylation of Emulsifier D is not disclosed in US 2010/0144925 A1. For Comparative Example 1, Hitenol BC 10 was used with a mean degree of ethoxylation of 10.
[9] Dispersion 8 was already prone to severe thickening after only 2 months
[10] The active component of Emulsogen EPA 073 is a non-copolymerizable emulsifier

As is evident from Table 1, copolymerizable surfactants with a mean degree of ethoxylation below 20 mol in an amount below 5% by weight (based on the total amount of monomers) sufficiently stabilize the organic-inorganic composite dispersion such that thickening and coagulation after 15 months of storage is prevented.

*Examples 15-20 (façade paints)*

Façade paints were prepared by mixing the ingredients in Table 2 at room temperature under stirring. After dissolving and dispersing ingredients nos. 2-5 in water, pigment and fillers as per ingredients nos. 6-10 were dispersed consecutively by increasing the dissolver speed to 5000 rpm. After the preparation of the mill base, ingredients nos. 11-13 were added while gently stirring. The solid contents of all polymer dispersions were adjusted to 45% before their addition.

**Table 2:** Composition of the façade paints

| Pos. | | Supplier | Description | Parts per weight |
|---|---|---|---|---|
| 1 | Water | | | 169.5 |
| 2 | Tylose® MH 30000 YG8 | SE Tylose | Thickener | 1.5 |
| 3 | Lopon® 990 | ICL | Dispersing agent | 4 |
| 4 | AMP 90 | Angus | 2-Amino-2-methyl-1-propanol, 90 wt% in water | 3 |
| 5 | Agitan® 281 | Miinzing | Defoamer | 2 |
| 6 | Kronos® 2310 | Kronos | Titanium dioxide | 120 |
| 7 | MicaCelia 125 L | Ziegler | Muscovite Mica | 75 |
| 8 | Calibrite SL | Omya | Calcium carbonate | 170 |
| 9 | Socal® P 2 | Imerys | Calcium carbonate | 75 |
| 10 | Omyacarb® 2 GU | Omya | Calcium carbonate | 150 |
| 11 | Dispersion per Ex. 1-13 | | | 200 |
| 12 | Tego® Phobe 1401 | Evonik | Hydrophobization agent | 20 |
| 13 | Texanol™ | Eastman | Coalescent agent (2,2,4-trimethyl-1,3-pentanediol monoisobutyrate) | 10 |

*Liquid water transmission rates*

The liquid water transmission rate (w value) is a fundamental value in construction physics. The lower the w value, the higher the resistance of a coating against the permeability of water. The w values of the coatings were determined according to DIN EN 1062-3. Aerated concrete specimens (class P4-500 according to DIN EN 771-4, circular cylinder, disc area = 0.0298 $m^2$) were pre-coated with a primer on one side and dried for 24 h. Façade paints, as per the composition of Table 2, were homogeneously applied twice to achieve a wet coating weight of approx. 15 g (2 x 7.5 g). The lateral surfaces of the specimens were then sealed with liquefied paraffin (m.p. = 58 - 60°C, AppliChem). The coated specimens were dried for 7 days at 23°C and 50% relative humidity. Each specimen was weighed before its coated surface was immersed in DI water for 24 h (1$^{st}$ conditioning). After removing excess water, the gravimetric water uptake was determined by weighing the specimen after 30 min, 1 h, 3 h, 6 h, and 24 h. The specimens were then dried for 24 h at 45°C in an oven with recirculating air. The described process of water immersion and drying was repeated twice (2$^{nd}$ and 3$^{rd}$ conditioning). After the 3$^{rd}$ conditioning, the specimens were stored at 23°C and 50% relative humidity for at least 24 h (until achieving constant weight). The water absorption coefficient was determined by a fourth immersion of the coated surface in water for 24 h and weighing of the specimen after defined immersion times, as described above. The water permeability (in kg $m^{-2}$) at a given immersion time was calculated as the mass difference between the wet and dry specimen divided by the surface area of the coating. The $w_{24}$-value, as reported in Table 3, was then calculated by dividing the water permeability after 24 h by the square root of the immersion time.

As is evident from Table 3, paint 17 based on a dispersion as per Example 3 exhibits the lowest water transmission rate $w_{24}$ of all paints 15-18 of otherwise identical composition (except for the copolymerizable surfactant). Surfactants according to Formula 2 are hence well suited to achieve coatings with a desired low liquid water permeability. Low $w_{24}$ values can further be obtained through incorporation of hydrophobic monomers with a Hansch parameter >2.5, as evidenced by paint Examples 19-20.

**Table 3:** Properties of the façade paints

| Paint Example No. | Comprising dispersion as per Example | $w_{24}$ (kg $m^{-2}$ $h^{-0.5}$) | ΔL after 12 months (white paint)[1] | ΔE after 12 months (red paint)[1,2] | ΔE after 12 months (blue paint)[1,3] |
|---|---|---|---|---|---|
| 15 | 1 (comp.) | 0.21 | -5.3 | 37.5 | 24.0 |
| 16 | 2 (inv.) | 0.24 | -4.0 | 37.1 | 23.2 |
| 17 | 3 (inv.) | 0.16 | -4.4 | 35.6 | 23.6 |
| 18 | 9 (inv.) | 0.27 | -5.0 | 32.3 | 21.3 |
| 19 | 12 (inv.) | 0.07 | -5.1 | 34.5 | 23.0 |
| 20 | 13 (inv.) | 0.13 | -4.6 | 31.9 | 21.8 |

[1] In this paint, 100 parts per weight of Dispersion as per Ex. 1-14 was replaced by 100 parts per weight of Mowilith® LDM 7717, a pure acrylic dispersion, commercially available from Celanese, with a solid content of approx. 46%.
[2] The paints were colored red by mixing 1.56 wt% Colanyl Red D3GD 500 (Clariant, Red 254, CAS: 84632-63-5), an organic pigment paste based on diketopyrrolopyrrole (DPP) into the paint.
[3] The paints were colored blue by mixing 1.08 wt% Colanyl Blue A2R 500 (Clariant, Blue 15:1, CAS: 12239-87-1), an organic pigment paste based on copper phthalocyanine into the paint.

**Exterior weathering and color stability**

The façade paints were applied on pretreated cement asbestos plates (Eternit®). The pretreatment comprises watering to remove calcium salts from the plates (3 times for 3 days), and applications of a fluate (Fassaden-Perfekt-Konzentrat from Hornbach) and a primer coating (Mowilith® LDM 7667). The paints were applied two times to yield a film thickness of the dried paint of approx. 100 μm.

The coated plates were subjected to outdoor weathering. They were mounted into metal supports at an angle of 45° and facing southbound. Before outdoor exposure, the initial color of the coated plates was measured in the framework of the CIELab color space. The CIELab color space defines every color as a three coordinate point {L,a,b}, where L represents the black-white axis, a the red-green axis, and b the blue-yellow axis. The color difference after outdoor exposure for one year could then be quantified by the values ΔL (for white paints) and ΔE (for colored paints). ΔE is the Euklidic difference between the initial $\{L,a,b\}_i$ and the exposed $\{L,a,b\}_e$ color points:

$\Delta E = \sqrt{(L_e - L_i)^2 + (a_e - a_i)^2 + (b_e - b_i)^2}$. The smaller $\Delta E$, the better is the color stability of the respective system.

While the color stability largely depends on the chemical nature of the pigment, the polymeric binder also significantly influences the color stability of a paint. As is evident from Table 3, the color retention of all paints based on inventive composite dispersions is improved vs. Paint 15 using a comparative composite dispersion as per Example 1.

$\Delta L = L_e - L_i$ is a measure for the retention of the "whiteness" of a white paint. A low $\Delta L$ value is hence a measure for the paints' resistance against soiling and against growth of fungi, algae or other microorganisms. As evident from Table 3, all paints based on inventive composite dispersions exhibit lower $\Delta L$ values after exterior weathering vs. Paint 15 using a comparative composite dispersion as per Example 1.

While the invention has been described in detail and illustrated by reference to particular embodiments, modifications within the spirit and scope of the invention will be readily apparent to those of skill in the art. Those of ordinary skill in the art will also appreciate that the invention lends itself to variations not necessarily illustrated herein. For this reason, then, reference should be made solely to the appended claims for purposes of determining the true scope of the present invention. It should be understood that aspects of the invention and portions of various embodiments and various features recited above and/or in the appended claims may be combined or interchanged either in whole or in part. In the foregoing descriptions of the various embodiments, those embodiments which refer to another embodiment may be appropriately combined with other embodiments as will be appreciated by one of ordinary skill in the art. Furthermore, those of ordinary skill in the art will appreciate that the foregoing description is by way of example only, and is not intended to limit the invention.

## Claims

1. A method for producing an organic-inorganic composite dispersion by means of radically initiated emulsion polymerization of ethylenically unsaturated monomers, comprising adding to a reactor:

   (A) at least one ethylenically unsaturated monomer which has at least one silicon-comprising group;
   (B) at least one ethylenically unsaturated surface-active monomer according to Formulas 1 or 2 (below), where a is an integer from 0 to 5, *b* is an integer from 0 to 1, c is an integer from 1 to 3, *d is* an integer from 1 to 5, *n* is an integer from 4 to 15, preferably from 5 to 12, X is O or NH, M is an alkali metal ion or an ammonium ion, and R is C1-C30-alkyl, C2-C30-alkenyl, cycloalkyl, cycloalkenyl, aryl or acyl, preferably C6-C16-alkyl or aryl, in a weight of from 1 wt.% to 5 wt.%, based on the total weight of monomers; and
   (C) at least one additional monomer copolymerizable with monomers (A) and (B),

   wherein one or more initiators are added to the reactor before and/or during the emulsion polymerization; and wherein colloidal silica is also added, preferably after the polymerization.

Formula 1:

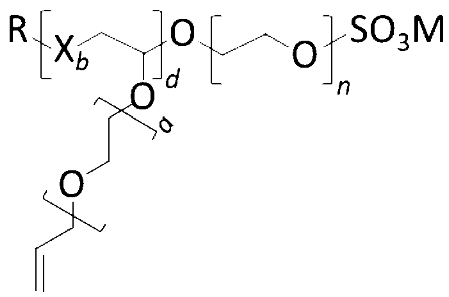

Formula 2:

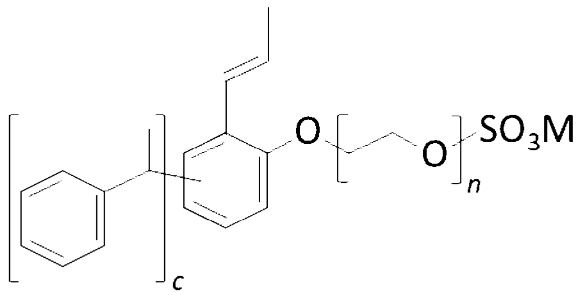

2. The method of claim 1, wherein instead of or in addition to said at least one ethylenically unsaturated monomer having at least one silicon-comprising group, an alkoxysilane-functional compound having at least one amino, mercapto or epoxide group is added, preferably after completion of the emulsion polymerization.

3. The method of claims 1 or 2, wherein the polymerization produces a copolymer comprising more than 50 wt.%, based on the total amount of monomers, of monomer units based on esters of α,β-ethylenically unsaturated carboxylic acids, vinyl esters of saturated carboxylic acids, vinylaromatic monomers or combinations thereof, preferably C1-C8 alkyl esters of acrylic and methacrylic acid.

4. The method of claim 3, wherein at least 5% by weight, preferably at least 10% by weight of the monomers based on esters of α,β-ethylenically unsaturated carboxylic acids, vinyl esters of saturated carboxylic acids, vinylaromatic monomers or combinations thereof (preferably C1-C8 alkyl esters of acrylic and methacrylic acid), have a Hansch parameter greater 2.5.

5. The method of claim 3, wherein at least 5% by weight, preferably at least 10% by weight of the monomers based on esters of α,β-ethylenically unsaturated carboxylic acids, vinyl esters of saturated carboxylic acids, vinylaromatic monomers or combinations thereof (preferably C1-C8 alkyl esters of acrylic and methacrylic acid), have a Hansch parameter greater 2.5 and form homopolymers that have a glass transition temperature greater than 0 °C.

6. The method of any of the preceding claims, wherein the polymerization produces a copolymer comprising from 0.1 wt.% to 10 wt.%, based on the total amount of monomers, of monomer units based on α,β-ethylenically unsaturated mono- and/or dicarboxylic acids, or of α,β-ethylenically unsaturated sulfonic, phosphoric, or phosphonic acids or amides and anhydrides of α,β-ethylenically unsaturated mono- or dicarboxylic acids, or combinations thereof, preferably α,β-ethylenically unsaturated mono- or dicarboxylic acids, more preferably methacrylic acid and acrylic acid.

7. The method of any of the preceding claims, wherein the at least one ethylenically unsaturated surface-active monomer is in accordance with formula 2.

8. The method of any of the preceding claims, wherein at least one ethylenically unsaturated monomer having at least one silicon-comprising group is an alkoxysilyl-functional monomer, preferably a vinyltrialkoxysilane, more preferably vinyltrimethoxysilane or vinyltriethoxysilane.

9. The method of any of the preceding claims, wherein the weight of the at least one ethylenically unsaturated monomer having at least one silicon-comprising group is 0.2 wt.% to 10 wt.%, preferably 0.3 wt.% to 5 wt.%, more preferably 0.5 wt.% to 3 wt.%, based on the total weight of monomers.

10. The method of any of the preceding claims, further comprising adding at least one pigment after polymerization, preferably at least one organic pigment.

11. The method of any of the preceding claims, further comprising adding a mineral filler after polymerization.

12. The method of any of the preceding claims, wherein the (B) at least one ethylenically unsaturated surface-active monomer is present in amount from 1 wt.% to 2.9 wt.%

Europäisches Patentamt
European Patent Office
Office européen des brevets

# EUROPEAN SEARCH REPORT

Application Number
EP 25 20 5607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 2008 031297 A (ASAHI KASEI CHEMICALS CORP) 14 February 2008 (2008-02-14)<br>* paragraphs [0031], [0044]; claims 1-3; examples B2-1, 1 *<br>----- | 1,3-6, 8-12<br>2,7 | INV.<br>C08F2/26<br>C08F220/14<br>C04B26/02<br>C08K3/22<br>C09D133/14<br>C08K3/36<br>C09D133/12<br>C08F220/18 |
| X<br>Y | EP 1 956 049 A1 (ASAHI KASEI CHEMICALS CORP [JP]) 13 August 2008 (2008-08-13)<br>* paragraphs [0070], [0103]; examples B1-B5, 1-11 *<br>----- | 1-6,8-12<br>2,7 | |
| Y | MARQUEZ IRENE ET AL: "Influence of polymerizable surfactants on the adhesion performance and water resistance of water-based acrylic pressure-sensitive adhesives (PSAs)",<br>JOURNAL OF ADHESION SCIENCE AND TECHNOLOGY,<br>1 January 2022 (2022-01-01), pages 1-19, XP093166427,<br>DOI: 10.1080/01694243.2022.2095152<br>* the whole document *<br>----- | 7 | TECHNICAL FIELDS SEARCHED (IPC) |
| Y | AU 2017 425 705 A1 (DOW GLOBAL TECHNOLOGIES LLC [US]; ROHM & HAAS [US]) 27 February 2020 (2020-02-27)<br>* page 14, lines 7-11; claim 1; examples Ex1-3 *<br>----- | 7 | C08F<br>C08K<br>C04B<br>C09D |
| X<br>Y | CN 112 142 903 A (ETERNAL CHEMICAL CO LTD) 29 December 2020 (2020-12-29)<br>* claims 1, 6 *<br>----- | 2<br>2 | |

The present search report has been drawn up for all claims

1

| Place of search | Date of completion of the search | Examiner |
|---|---|---|
| Munich | 4 February 2026 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 5607

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2026

| Patent document cited in search report | Publication date | Patent family member(s) | Publication date |
|---|---|---|---|
| JP 2008031297 A | 14-02-2008 | JP 5137352 B2 | 06-02-2013 |
| | | JP 2008031297 A | 14-02-2008 |
| EP 1956049 A1 | 13-08-2008 | CN 101331192 A | 24-12-2008 |
| | | EP 1956049 A1 | 13-08-2008 |
| | | EP 2816087 A1 | 24-12-2014 |
| | | ES 2544858 T3 | 04-09-2015 |
| | | ES 2614555 T3 | 31-05-2017 |
| | | JP 4785865 B2 | 05-10-2011 |
| | | JP 2010280898 A | 16-12-2010 |
| | | JP WO2007069596 A1 | 21-05-2009 |
| | | KR 20080076949 A | 20-08-2008 |
| | | KR 20090128521 A | 15-12-2009 |
| | | TW I357919 B | 11-02-2012 |
| | | TW 201107421 A | 01-03-2011 |
| | | US 2009286068 A1 | 19-11-2009 |
| | | US 2011262738 A1 | 27-10-2011 |
| | | WO 2007069596 A1 | 21-06-2007 |
| AU 2017425705 A1 | 27-02-2020 | AU 2017425705 A1 | 27-02-2020 |
| | | BR 112020001280 A2 | 28-07-2020 |
| | | CA 3071199 A1 | 07-02-2019 |
| | | CN 110945038 A | 31-03-2020 |
| | | EP 3661985 A1 | 10-06-2020 |
| | | KR 20200037262 A | 08-04-2020 |
| | | US 2020377627 A1 | 03-12-2020 |
| | | US 2023064051 A1 | 02-03-2023 |
| | | WO 2019023844 A1 | 07-02-2019 |
| CN 112142903 A | 29-12-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018015169 A1
- US 20100144925 A1


### Non-patent literature cited in the description


- *CHEMICAL ABSTRACTS*, 84632-63-5
- *CHEMICAL ABSTRACTS*, 12239-87-1